# EUROPÄISCHE PATENTSCHRIFT

(11) **EP 2 226 447 B1**
(45) Veröffentlichungstag und Bekanntmachung des Hinweises auf die Patenterteilung: **06.06.2012**
(21) Anmeldenummer: 09002829.1
(22) Anmeldetag: 27.02.2009
(51) Int. Cl.: E04F 15/02, F16B 5/00

(54) **Paneel, insbesondere Bodenpaneel**
Panelling, in particular floor panelling
Panneau, en particulier panneau de sol

(43) Veröffentlichungstag der Anmeldung: 08.09.2010
(73) Patentinhaber: Flooring Technologies Ltd., Pieta PTA 9044 (MT)
(72) Erfinder:
(74) Vertreter: Rehmann, Thorsten

(56) Entgegenhaltungen:
- WO-A-2008/116623
- DE-U1- 20 116 962
- FR-A- 2 810 060

## Beschreibung

Die Erfindung betrifft ein Paneel, insbesondere Bodenpaneel, mit einem Kern aus Holzwerkstoff oder Holzwerkstoff-Kunststoff-Gemisch, einer Oberseite und einer Unterseite, zwei sich gegenüberliegenden Seitenkanten, die eine solche zueinander korrespondierende Profilierung aufweisen, dass zwei identisch ausgebildete Paneele durch eine im Wesentlichen vertikale Fügebewegung in horizontaler und vertikaler Richtung miteinander verbindbar und verriegelbar sind, die Verriegelung in horizontaler Richtung durch eine Hakenverbindung mit einem ein Hakenelement aufweisenden oberen Verriegelungsabschnitt und einem ein Hakenelement aufweisenden unteren Verriegelungsabschnitt bewirkbar ist, die Verriegelung in vertikaler Richtung durch zumindest ein in horizontaler Richtung bewegbares, einstückig aus dem Kern herausgebildetes Federelement bewirkbar ist und das mindestens eine Federelement in Richtung der gegenüberliegenden Seitenkante mittels eines im Wesentlichen vertikalen Schlitzes gegenüber dem Kern frei ist und bei der Fügebewegung hinter eine sich im Wesentlichen in horizontale Richtung erstreckende Verriegelungskante einschnappt, die an einem Verriegelungsvorsprung ausgebildet ist.

Ein solches Paneel ist beispielsweise aus der WO 2007/020088 A1 bekannt. Mit der korrespondierenden Profilierung wird mit voneinander getrennten Elementen die horizontale Verriegelung und die vertikale Verriegelung erreicht.

Auch aus der WO 2004/003314 A1 sind Fußbodenpaneele bekannt, die durch eine im Wesentlichen vertikale Fügebewegung miteinander verbunden und zueinander verriegelt werden können. Bei diesen Paneelen ist der Verriegelungsvorsprung durch einen vertikalen Schlitz federelastisch ausgebildet und kann während des Verriegelungsvorganges in horizontaler Richtung ausweichen.

Diese Art der Verriegelung ist bevorzugt an der Querseite von Bodenpaneelen vorgesehen. Sie kann aber auch an der Längsseite bzw. sowohl an der Längsseite als auch an der Querseite vorgesehen sein.

Bei dem aus der EP 1 650 375 A1 bekannten Paneel besteht das Federelement aus Kunststoff und ist in eine horizontal verlaufende Nut an einer der Seitenkanten eingesetzt und an seiner Oberseite abgeschrägt. Ähnlich einem Türschnapper wird durch die Schräge das Federelement von dem neu anzusetzenden Paneel nach innen in die Nut hineingedrückt, wenn dieses mit seiner Unterseite auf die Abschrägung auftritt und weiter abgesenkt wird. Wenn das neu anzulegende Paneel vollständig auf den Unterboden abgesenkt ist, schnappt das Federelement in eine horizontal in der gegenüberliegenden Seitenkante eingebrachte Nut ein und verriegelt die beiden Paneele in vertikaler Richtung. Für die Fertigung dieses Federelementes sind spezielle Spritzgusswerkzeuge notwendig, so dass die Herstellung relativ teuer ist. Des Weiteren muss ein hochwertiger Kunststoff verwendet werden, um ausreichende Festigkeitswerte zur Verfügung zu stellen, was das Federelement weiter verteuert. Werden Kunststoffe mit zu geringen Festigkeitswerten verwendet, führt dies zu relativ großen Abmaßen der Federelemente, da nur dadurch gewährleistet ist, dass entsprechende Kräfte erzeugt bzw. übertragen werden können.

Dadurch, dass das Verriegelungselement als separates Bauteil ausgeführt ist, ergeben sich zusätzliche Aufwendungen. Die Herstellung des Verriegelungselementes erfolgt technologisch bedingt räumlich getrennt von den Paneelen, so dass eine Einbindung in den kontinuierlichen Herstellungsprozess, insbesondere für Fußbodenpaneele, eher nicht möglich ist. Durch die unterschiedlichen Materialien, Holzwerkstoff auf der einen Seite und Kunststoff auf der anderen Seite, ist die Angleichung von Fertigungstoleranzen aus zwei separaten Herstellungsprozessen aufwändig und kostenintensiv. Da die Verriegelung in vertikaler Richtung bei fehlendem Verriegelungselement unwirksam wäre, muss dieses zudem gegen Herausfallen aus der in die Seitenkante eingebrachten Nut im weiteren Herstellungsprozess und beim Transport gesichert werden. Auch diese Sicherung ist aufwändig. Alternativ dazu könnte das Verriegelungselement dem Verbraucher separat zur Verfügung gestellt werden.

Immer häufiger werden die in Rede stehenden Bodenpaneele von Heimwerkern verlegt, so dass grundsätzlich die Möglichkeit aufgrund fehlender Erfahrung besteht, dass die benötigte Anzahl der Verriegelungselemente zunächst falsch eingeschätzt wird und diese nicht in ausreichender Menge beschafft werden, um einen Raum vollständig auslegen zu können. Außerdem ist nicht auszuschließen, dass der Heimwerker beim Einsetzen des Federelementes Fehler begeht, was dazu führt, dass die Verriegelung nicht exakt möglich ist und sich der Verbund im Laufe der Zeit löst, was dann fälschlich vom Verbraucher der vom Hersteller gelieferten Qualität zugeschrieben wird.

Aus der DE 102 24 540 A1 ist ein Paneel bekannt, das an gegenüberliegenden Seitenkanten so profiliert ist, dass sich hakenförmige Verbindungselemente zur Verriegelung in horizontaler Richtung ausbilden. Zur Verriegelung in vertikaler Richtung sind an den Verbindungselementen voneinander horizontal und vertikal beabstandete Formschlusselemente und hierzu korrespondierende Hinterschnitte mit jeweils einer horizontal ausgerichteten Verriegelungsfläche vorgesehen. Die Querausdehnung derartiger horizontal ausgerichteter Verriegelungsflächen beträgt etwa 0,05 bis 1,0 mm. Damit das Zusammenfügen zweier Paneele überhaupt möglich bleibt, muss die Dimensionierung so klein sein. Dadurch stellt sich aber zwangsläufig ein, dass nur geringe, vertikal gerichtete Kräfte aufgenommen werden können, so dass mit äußerst geringen Toleranzen gefertigt werden muss, um sicherzustellen, dass nicht bereits bei leichten Bodenunebenheiten und/oder weichen Untergründen die Verbindung bei normaler Belastung aufspringt.

In der DE 10 2007 015 048 A1 ist ein Paneel beschrieben, bei dem die Verriegelung in vertikaler Richtung durch ein in horizontaler Richtung bewegbares Federelement bewirkt wird. Das Federelement schnappt bei einer Fügebewegung hinter eine sich im Wesentlichen in horizontale Richtung erstreckende Verriegelungskante. Das Federelement ist durch einen horizontalen und vertikalen Schnitt aus dem Kern herausgebildet und an mindestens einem seiner beiden Enden mit dem Kern verbunden. Der horizontale und vertikale Schnitt ermöglichen die für das Herstellen der Verriegelung erforderliche Federbewegung des Federelementes. Diese Verriegelung ist jedoch nicht für dünnere Paneele mit einer Plattenstärke von etwa 4 mm bis 8 mm geeignet.

Von dieser Problemstellung ausgehend soll das eingangs beschriebene Paneel verbessert werden.

Zur Problemlösung zeichnet sich ein gattungsgemäßes Paneel dadurch aus, dass das mindestens eine Federelement in Richtung seiner Seitenkante an mindestens einem seiner beiden Enden mit dem Kern verbunden ist und die Breite der Verriegelungskante über die Länge L der gegenüberliegenden Seitenkante unterschiedlich groß ist.

Durch diese Ausgestaltung werden mindestens zwei Verriegelungsvorsprünge ausgebildet, die die volle Breite der Verriegelungskante aufweisen und zwischen den beiden Verriegelungsvorsprüngen bildet sich eine schmalere Verriegelungskante aus.

Zur Veränderung der Breite ist der Verriegelungsvorsprung teilweise von der Unterseite ausgehend mit einer im Winkel γ verlaufenden Fase versehen.

Im Gegensatz zu dem aus der unveröffentlichten Patentanmeldung PCT/EP 2008/007328, auf die vollinhaltlich Bezug genommen wird, bekannten Paneel, wird das Material zwischen zwei Verriegelungsvorsprüngen also nicht vollständig abgetragen, sondern bereichsweise unter dem Winkel γ stehen gelassen. Die Profilierung wird dabei so gestaltet, dass das Verriegelungselement beim Zusammenfügen zweier Paneele hinter den unbeweglichen Teil des unteren Verriegelungsvorsprunges am unteren Hakenelement einhakt und dadurch die vertikale Kraftübertragung verbessert.

Die Größe des Winkels γ beträgt vorzugsweise zwischen 30 und 60 Grad und insbesondere vorzugsweise zwischen 45 und 55 Grad.

Die kleinste Breite der Verriegelungskante beträgt vorzugsweise maximal 0,9 mm und insbesondere vorzugsweise 0,6 mm.

Durch die Breite des vertikalen Schlitzes lassen sich sowohl die Stärke der Anbindung des Federelementes an das Kernmaterial bestimmen als auch ein Anschlag in horizontaler Richtung für das Federelement schaffen, so dass dieses gegen Überdehnung sicher geschützt wird.

Erfindungsgemäß ist vorgesehen, dass der im Wesentlichen vertikale Schlitz zumindest teilweise durch den unteren Verriegelungsabschnitt hindurch gebildet ist. Der vertikale Schlitz muss nicht über die gesamte Länge als Durchgang ausgebildet sein, sondern kann insbesondere in Übergangsbereichen an seinen Enden als Spalt ausgebildet sein. Mit im Wesentlichen vertikal ist gemeint, dass der Schlitz in vertikaler Richtung verlaufen oder gegenüber der Vertikalen leicht geneigt sein kann. Der Spalt im Übergangsbereich ist zweckmäßig zur Unterseite des Paneels hin geöffnet und zur Oberseite des Paneels hin geschlossen. Dies ermöglicht eine einfache und kostengünstige Herstellung, weil das Paneel mit gleichbleibender Geschwindigkeit über ein Fräswerkzeug bewegt werden kann und nur die Eindringtiefe des Fräswerkzeugs in das Paneel verändert werden muss. Ein Übergangsbereich kann an einem oder an beiden Enden des Federelements ausgebildet sein. Der Spalt kann eine variierende Tiefe aufweisen, beispielsweise eine gleichmäßig zunehmende Tiefe.

Im Bereich des Hakenelementes weist der Verriegelungsabschnitt zweckmäßig eine maximale vertikale Ausdehnung auf, so dass das Federelement in diesem Bereich mit einer entsprechend großen vertikalen Ausdehnung ausgebildet werden kann. Mit zunehmender vertikaler Ausdehnung des Federelementes erhöht sich auch dessen Steifigkeit.

Wenn über die Länge der Seitenkante eine Mehrzahl von zueinander beabstandeten Federelementen vorgesehen ist, wird die Stabilität der Verbindung erhöht, weil der freie Federweg in Längsrichtung des Federelements begrenzt wird. Der Abstand zwischen den einzelnen Federelementen kann mehr oder weniger groß gewählt werden. Je geringer der Abstand ist, umso größer ist natürlich die wirksame Fläche, mit der verriegelt wird, so dass die übertragbaren Kräfte in vertikaler Richtung entsprechend hoch sind.

Wenn die äußere Kante des Federelementes in einem (spitzen) Winkel, vorzugsweise in einem Winkel zwischen 40° und 50°, zur Oberseite geneigt ist, wird die Fügebewegung erleichtert, weil das Federelement mit zunehmender Bewegung tiefer in Richtung des Paneelkerns einfedert. Zudem wird die Gefahr verringert, das Federelement bei der Fügebewegung zu beschädigen.

Das Hakenelement an dem oberen Verriegelungsabschnitt wird bevorzugt durch einen in Richtung der Unterseite des Paneels gerichteten Absatz gebildet. Das Hakenelement an dem unteren Verriegelungsabschnitt wird bevorzugt durch einen in Richtung der Oberseite des Paneels gerichteten Absatz gebildet.

Die erfindungsgemäße Ausbildung des Federelements ist besonders für dünne Paneele geeignet. Unter dünnen Paneelen sind solche mit einer Plattenstärke von etwa 4 mm bis etwa 8 mm zu verstehen. Vorzugsweise wird eine Plattenstärke von etwa 7 mm oder etwa 8 mm gewählt.

Mit Hilfe einer Zeichnung werden Ausführungsbeispiele der Erfindung nachfolgend beschrieben.

Es zeigen:
- Figur 1: eine Untersicht auf zwei miteinander verbundene Paneele;
- Figur 2: den Schnitt entlang der Linie II-II nach Figur 1;
- Figur 3: den Schnitt entlang der Linie III-III nach Figur 1;
- Figuren 4 bis 6: zwei Paneele im Teilschnitt zu drei aufeinander folgenden Zeitpunkten während der Fügebewegung;
- Figur 7: zwei nicht miteinander verbundene Paneele in Unteransicht;
- Figur 8: den Schnitt entlang der Linie VIII-VIII nach Figur 7;
- Figur 9: eine weitere Ausführungsform erfindungsgemäßer Paneele in einer Dar- stellung gemäß Figur 6;
- Figur 10: eine weitere Ausführungsform erfindungsgemäßer Paneele in einer Dar- stellung gemäß Figur 6.

Die Paneele 1, 2 sind identisch ausgebildet. Sie bestehen aus einem Kern 3 aus Holzwerkstoff oder einem Holzwerkstoff-Kunststoff-Gemisch. An ihren sich gegenüber liegenden Seitenkanten I, II sind die Paneele 1, 2 profiliert, wobei die Seitenkante I von der Unterseite 4 und die Seitenkante II von der Oberseite 5 fräsend bearbeitet wurde.

An der Seitenkante II sind zwei Federelemente 6 mit einer Länge L₀ ausgebildet. Die Federelemente 6 sind identisch, so dass im Folgenden beispielhaft eines der Federelemente 6 beschrieben wird. Es ist jedoch nicht notwendig, dass die Federelemente 6 identisch ausgebildet sind. Anstatt einer Mehrzahl von Federelementen 6 kann auch ein einziges über die volle Länge L der Seitenkante II reichendes Federelement vorgesehen sein.

Das Federelement 6 wird durch Freifräsen des Kerns 3 erzeugt, indem ein im Wesentlichen vertikal verlaufender Schlitz 7 mit Enden 7a, 7b eingefräst wird. Die Seitenkanten I, II haben die Länge L. In Längsrichtung der Seitenkante II ist das Federelement 6 an seinen Enden 6a, 6b mit dem Kernmaterial verbunden. Die Freilegung des Federelementes 6 vom Kern 3 erfolgt ausschließlich durch den Schlitz 7. Die äußere Kante 6c des Federelements 6 ist gegenüber der Oberseite 5 des Paneels 2 im Winkel α geneigt. Die vertikalen Flächen der Seitenkanten I, II sind so bearbeitet, dass sich im Bereich der Oberseite 5 Anlageflächen 8, 9 ausbilden.

An der dem Federelement 6 gegenüber liegenden Seitenkante I ist das Paneel 1 mit einer sich im Wesentlichen in horizontaler Richtung H erstreckenden Nut 10 versehen. Die Nut 10 erstreckt sich über die gesamte Länge L der Seitenkante I. Die obere Nutwange 11 der Nut 10 verläuft im Wesentlichen waagerecht. Aus den Figuren ist ersichtlich, dass der Nutgrund 12 der Nut 10 im Wesentlichen parallel zur äußeren Kante 6c des Federelementes 6 verläuft, was die Fertigung der Nut 10 erleichtert. Er könnte aber auch in vertikaler Richtung oder mit einem vom Winkel α abweichenden Winkel ausgeführt sein.

Die Verriegelung der beiden Paneele 1, 2 in horizontaler Richtung erfolgt über die durch eine Stufenprofilierung fräsend erzeugten Hakenelemente 13, 14. Das Hakenelement 13 ist Teil eines oberen Verriegelungsabschnittes 15. Das Hakenelement 14 ist Teil eines unteren Verriegelungsabschnittes 16.

Das Hakenelement 13 weist einen sich in Richtung der Unterseite erstreckenden Absatz 17 auf. Das Hakenelement 14 weist einen sich in Richtung der Oberseite erstreckenden stufenförmigen Absatz 19 mit zwei Stufen 20a, 20b auf. Der Absatz hat eine im Wesentlichen plane horizontale Auflagefläche 18, die mit einer im Wesentlichen planen horizontalen Auflagefläche 22 des Hakenelementes 14 zusammenwirkt. Die Auflageflächen 18, 22 bilden eine im Wesentlichen horizontale Ebene E, so dass sich die miteinander verbundenen Paneele 1, 2 aufeinander abstützen.

Die Profilierung der Hakenelemente 13, 14 kann so gewählt werden, dass in der Verbindungsstelle eine Vorspannung erzeugt wird und die vertikalen Anlageflächen 8, 9 der Paneele 1, 2 aufeinander zugepresst werden, so dass an der Oberseite 5 kein sichtbarer Spalt entsteht. Um das Fügen der Paneele 1, 2 zu erleichtern, sind der stufenförmige Absatz 13 des oberen Verriegelungsabschnittes 15 und der stufenförmige Absatz 14 des oberen Verriegelungsabschnittes 16 an ihren Kanten gefast oder verrundet.

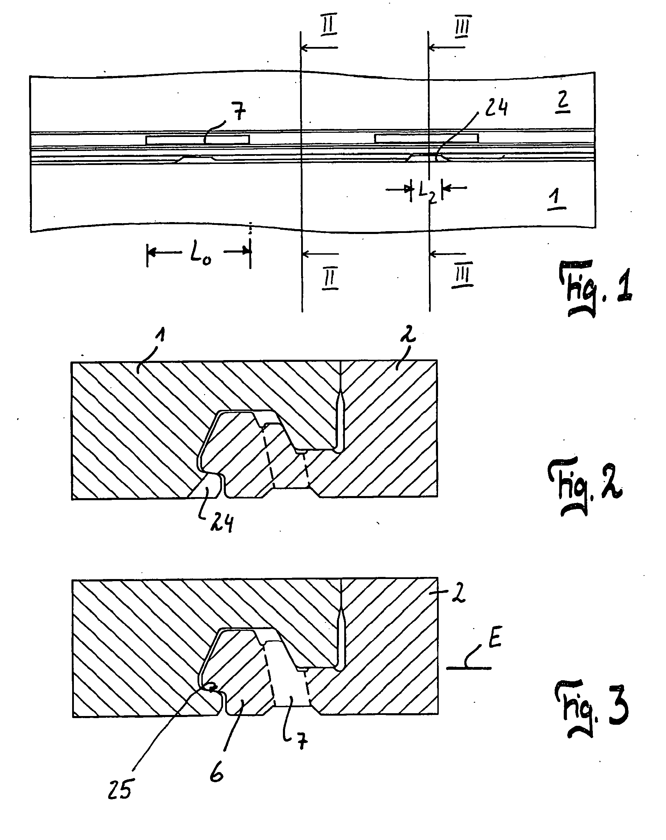

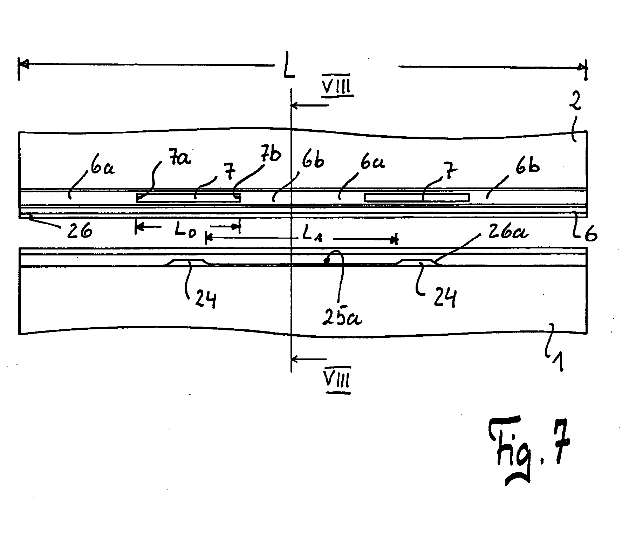

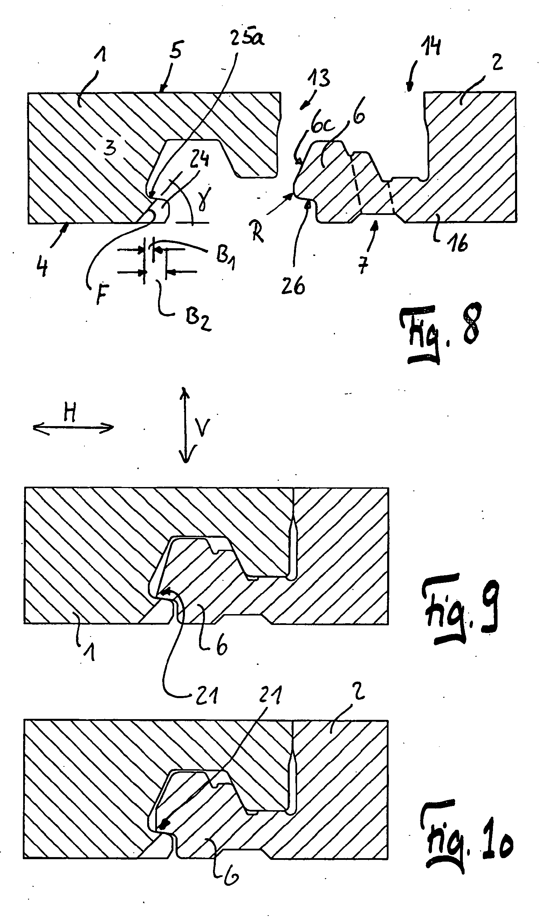

In Figur 2 ist ein Verriegelungsvorsprung 24 des Paneels 1 zu erkennen. Der Verriegelungsvorsprung 24 ist im Wesentlichen horizontal in Richtung des Paneels 2 gerichtet. Der Verriegelungsvorsprung 24 weist eine Verriegelungskante 25 mit der Breite B₂ auf. Zwischen zwei Vorsprüngen 24 ist die Verriegelungskante 25a mit der Breite B₁ ausgebildet (vgl. Figur 8). Die Breite B₁ der Verriegelungskante 25a beträgt maximal 0,9 mm. Vorzugsweise ist die Verriegelungskante 25a 0,6 mm breit. Die Verriegelungskante 25a wird erzeugt, indem der Vorsprung 24 über eine bestimmte Länge L₁ mit dem Winkel γ, der zwischen 30 und 60 Grad liegt, abgefast wird. Durch die Fase F bilden sich dann zwei Vorsprünge 24 mit der Länge L₂ aus, die zueinander beabstandet sind, und eine Verriegelungskante 25 mit der Breite B₂ aufweisen. Die Länge L₂ der Vorsprünge 24 ist kleiner als die Länge L₀ der Federelemente 6, wie Figur 3 deutlich erkennen lässt. Der Verriegelungsvorsprung 24 ist in seinem vorderen Bereich abgefast. In dem sich an die Verriegelungskante 25 anschließenden Bereich verläuft der Vorsprung 24 im Wesentlichen senkrecht. Jeder Vorsprung 24 weist in Draufsicht abgeschrägte Kanten 26a (Figur 7) auf, um die Gefahr von Beschädigungen beim Verriegeln der Paneele 1, 2 zu reduzieren.

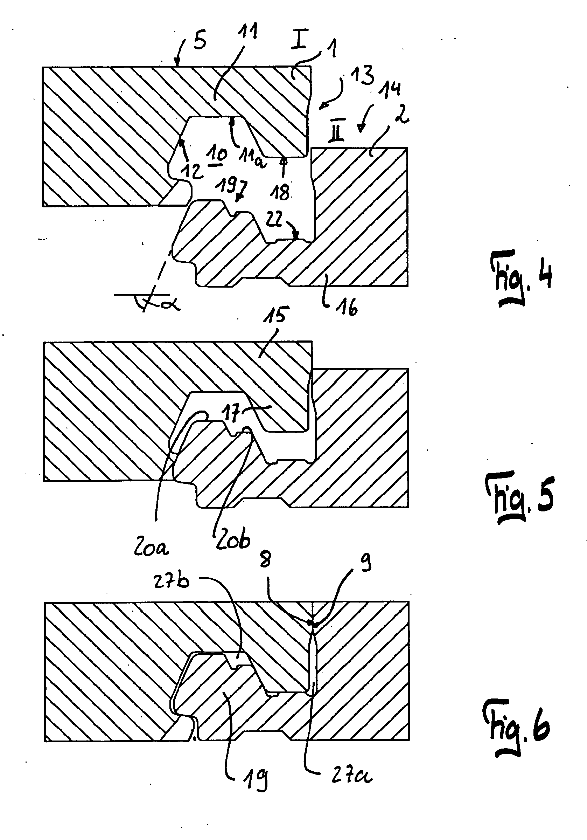

Während der Fügebewegung wird das Federelement 6 durch das Aneinanderstoßen mit dem bzw. den Vorsprüngen 24 in Richtung des Schlitzes 7 horizontal verschoben. Bei dieser Verschiebung baut sich durch die Verbindung mit dem Kern 3 an den Enden eine Spannung in dem Federelement 6 auf. Die Schlitzbreite nimmt dabei ab. Diese Spannung lässt das Federelement im letzten Abschnitt der Fügebewegung (Figur 6) in die Nut 10 schnappen, das heißt das Federelement 6 wird in Richtung der Nut 10 horizontal verschoben. Die horizontale Verschiebung erfolgt als Rückfederung in eine entsprechende Lage unter der Wirkung einer inneren Spannung. Die Schlitzbreite nimmt dabei wieder zu. Die Nut 10 ist so dimensioniert, dass das Federelement 6 seine ursprüngliche Lage einnehmen kann. Die Nut 10 ist etwas tiefer in den Kern 3 hineingefräst als es zur Aufnahme des Federelementes 6 erforderlich wäre. Dies erleichtert das Verlegen der Paneele 1, 2. Die Verriegelungskante 25a ist so ausgestaltet, dass sie beim Zusammenfügen zweier Paneele 1, 2 hinter den unbeweglichen Teil des Federelementes 6 am unteren Hakenelement 14 einhakt, wodurch die vertikale Kraftübertragung verbessert wird. Durch den flachen Winkel α wird einerseits das Zusammenfügen erleichtert, andererseits wird der zu überwindende Vorsprung derart ausgebildet, dass die äußerste Kante beim Zusammenfügen leicht plastisch verformt werden kann. Dadurch entsteht im verriegelten Zustand eine zusätzliche Klemmwirkung. Im Übergangsbereich zwischen ausgelenktem Federelement 6 und feststehender Verriegelungskante 25, 25a ändert sich auch die zur Verriegelung notwendige Kraft, indem durch das Ausweichen des Federelementes das mit der schmaleren Verriegelungskante 25a versehene Verriegelungselement einen kleineren Widerstand überwinden muss, bevor es hinter die Verriegelungskante 26 einschnappt.

Der Schlitz 7 hat eine Höhe von etwa 60% der Plattenstärke. Dies ermöglicht es, die erfindungsgemäße Verriegelung in vertikaler Richtung auch bei dünnen Paneelen mit Plattenstärken von etwa 4 mm bis etwa 8 mm einzusetzen. Die erfindungsgemäße Verriegelung in vertikaler Richtung lässt sich jedoch auch bei dickeren Paneelen, beispielsweise mit Plattenstärken von etwa 12 mm, vorteilhaft einsetzen.

Figur 6 lässt erkennen, dass bei den verlegten Paneelen 1, 2 im Bereich der Seitenkanten I, II Freiräume 27a, 27b vorgesehen sind. Die Freiräume 27a, 27b stellen die für das Verlegen benötigte Bewegungsfreiheit zur Verfügung und fangen etwaig auftretende Fertigungstoleranzen ab.

Das Freistellen des Federelementes 6 durch den vertikalen Schlitz 7 wird durch ein quer zur Bearbeitungsrichtung verschiebbares Werkzeug ermöglicht. Die Bearbeitung erfolgt dabei vorzugsweise im Durchlaufbetrieb, so dass sich am Beginn und am Ende des Schlitzes 7 je ein Übergangsbereich 23 ergibt.

Als Werkzeuge können ein Fräs-, Laser- oder Wasserstrahlwerkzeug oder auch stehende Klingen oder Räumnadeln verwendet werden. Bei dem in den Figuren dargestellten Ausführungsbeispiel ist nur ein verschiebbares Werkzeug nötig. Bei der Bearbeitung verringert sich der nicht freigestellte Bereich, der das Federelement 6 mit dem Kern 3 einstückig verbindet. Dadurch lassen sich auch unterschiedlich starke Verriegelungskräfte einstellen. Die Verriegelung ist bei dem Ausführungsbeispiel lösbar, indem die Paneele 1, 2 relativ zueinander entlang der Seitenkanten I, II verschoben werden oder indem ein nicht gezeigter Entriegelungsstift seitlich in die Verbindungsstelle eingeführt wird.

Die wesentlichen Vorteile einer Verbindung mit unterschiedlich breiten Verriegelungskanten 25, 25a an dem der Unterseite 4 des Paneels 1 nächsten Bereich des oberen Hakenelementes 13 liegen in der zusätzlich hauptsächlichen vertikalen Verriegelung zwischen den beiden Paneelen 1, 2. Es hat sich gezeigt, dass bei einem 193 mm breiten und 7,5 mm dicken Paneel 1, 2 auf sehr weicher Unterlage bei einer punktförmigen Belastung von 80 kg nahe der Querfuge auftretende Höhenversatz von 0,4 auf 0,1 mm verringert werden konnte. Der Auszugswert in Paneel-Ebene (Hakenelemente können weniger auseinander springen) sowie die Beständigkeit der Verbindung unter Stuhlrollenbelastung (festere Verbindung) wurden verbessert. Durch die Form des Überganges zum Verriegelungsvorsprung kann die Durchbiegungslinie der Federelemente angepasst werden. Dadurch ist ein schonenderes Überspringen möglich.

Wie Figuren 9, 10 zeigen, kann der Radius R an dem Federelement 6 (vgl. Figur 8) durch eine scharfe Kante 21 ersetzt werden, wodurch die Kontaktfläche zwischen der Verriegelungskante 25a und der Verriegelungskante 26 erhöht wird, bzw. durch Fortfall des Radius R die Verriegelungskraft, die notwendig ist, die Kante 6c am oberen Ende der Fase F vorbeizuziehen, reduziert wird. Die scharfe Kante 21 kann in eine senkrechte Wandung übergehen, die in Figur 10 nicht näher bezeichnet ist, bevor die Wandung 6c des Federelementes 6 parallel zum Nutgrund 12 geführt wird.

### Bezugszeichenliste

- 1: Paneel
- 2: Paneel
- 3: Kern
- 4: Unterseite
- 5: Oberseite
- 6: Federelement
- 6a: Ende (Federelement)
- 6b: Ende (Federelement)
- 6c: Kante
- 7: Schlitz
- 7a: Ende (Schlitz)
- 7b: Ende (Schlitz)
- 8: Anlagefläche
- 9: Anlagefläche
- 10: Nut
- 11: Nutwange
- 12: Nutgrund
- 13: oberes Hakenelement
- 14: unteres Hakenelement
- 15: oberer Verriegelungsabschnitt
- 16: unterer Verriegelungsabschnitt
- 17: Absatz
- 18: Auflagefläche
- 19: Absatz
- 20a: Stufe
- 20b: Stufe
- 21: Kante
- 22: Auflagefläche
- 24: Verriegelungsvorsprung
- 25: Verriegelungskante
- 25a: Verriegelungskante
- 26: Verriegelungskante
- 26a: Kante
- 27a: Freiraum
- 27b: Freiraum

- B₁: Breite
- B₂: Breite
- E: Ebene
- F: Fase
- H: Horizontale Richtung
- L: Länge
- L₀: Länge
- L₁: Länge
- L₂: Länge
- R: Radius
- V: Vertikale Richtung
- I: Seitenkante
- II: Seitenkante
- α: Winkel
- γ: Winkel

## Patentansprüche

1. Paneel, insbesondere Bodenpaneel, mit
- einem Kern (3) aus Holzwerkstoff oder Holzwerkstoff-Kunststoff-Gemisch,
- einer Oberseite (5) und einer Unterseite (4),
- zwei sich gegenüberliegenden Seitenkanten (I, II), die eine solche zueinander korrespondierende Profilierung aufweisen, dass zwei identisch ausgebildete Paneele (1, 2) durch eine im Wesentlichen vertikale Fügebewegung in horizontaler Richtung (H) und in vertikaler Richtung (V) miteinander verbindbar und verriegelbar sind,
- die Verriegelung in horizontaler Richtung (H) durch eine Hakenverbindung mit einem ein Hakenelement (13) aufweisenden oberen Verriegelungsabschnitt (15) und einem ein Hakenelement (14) aufweisenden unteren Verriegelungsabschnitt (16) bewirkbar ist,
- die Verriegelung in vertikaler Richtung (V) durch zumindest ein in horizontaler Richtung (H) bewegbares, einstückig aus dem Kern (3) herausgebildetes Federelement (6) bewirkbar ist,
- das mindestens eine an dem unteren Verriegelungsabschnitt (16) vorgesehene Federelement (6) in Richtung der gegenüberliegenden Seitenkante (I) mittels eines im Wesentlichen vertikalen Schlitzes (7) gegenüber dem Kern (3) frei und bei der Fügebewegung hinter eine sich im Wesentlichen in horizontale Richtung (H) erstreckende Verriegelungskante (25) einschnappt, die an einem Verriegelungsvorsprung (24) ausgebildet ist,
- das Federelement (6) in Richtung seiner Seitenkante (II) an mindestens einem seiner beiden Enden (6a, 6b) mit dem Kern (3) verbunden ist, **dadurch gekennzeichnet, dass**
- die Breite (B₁, B₂) der Verriegelungskante (25, 25a) über die Länge (L) der gegenüberliegenden Seitenkante (I) unterschiedlich groß ist.

2. Paneel nach Anspruch 1, **dadurch gekennzeichnet, dass** zur Veränderung der Breite (B₁, B₂) der Verriegelungsvorsprung (24) teilweise von der Unterseite (4) ausgehend mit einer im Winkel (γ) verlaufenden Fase (F) versehen ist.

3. Paneel nach Anspruch 2, **dadurch gekennzeichnet, dass** die Größe des Winkels (γ) zwischen 30 und 60 Grad beträgt.

4. Paneel nach Anspruch 3, **dadurch gekennzeichnet, dass** die Größe des Winkels (γ) zwischen 45 und 55 Grad beträgt.

5. Paneel nach einem oder mehreren der vorstehenden Ansprüche, **dadurch gekennzeichnet, dass** die kleinste Breite (B₁) der Verriegelungskante (25a) maximal 0,9 mm beträgt.

6. Paneel nach Anspruch 5, **dadurch gekennzeichnet, dass** die kleinste Breite (B₁) der Verriegelungskante (25a) 0,6 mm beträgt.

7. Paneel nach Anspruch 1, **dadurch gekennzeichnet, dass** der im Wesentlichen vertikale Schlitz (7) zumindest teilweise durch den unteren Verriegelungsabschnitts (16) hindurch gebildet ist.

8. Paneel nach einem oder mehreren der vorstehenden Ansprüche, **dadurch gekennzeichnet, dass** das mindestens eine Federelement (6) an einem seiner Enden (6a, 6b) mit dem Kern (3) verbunden ist.

9. Paneel nach Anspruch 8, **dadurch gekennzeichnet, dass** der im Wesentlichen vertikale Schlitz (7) an seinen beiden Enden (7a, 7b) Übergangsbereiche (23) aufweist, an denen der im Wesentlichen vertikale Schlitz (7) nicht durch den unteren Verriegelungsabschnitt (16) hindurch gebildet ist.

10. Paneel nach einem oder mehreren der vorstehenden Ansprüche, **dadurch gekennzeichnet, dass** der im Wesentlichen vertikale Schlitz (7) im Bereich des Hakenelements (14) des unteren Verriegelungsabschnitts (16) ausgebildet ist.

11. Paneel nach einem oder mehreren der vorstehenden Ansprüche, **dadurch gekennzeichnet, dass** über die Länge (L) der Seitenkante (II) eine Mehrzahl von zueinander beabstandeten Federelementen (6) vorgesehen ist.

12. Paneel nach einem oder mehreren der vorstehenden Ansprüche, **dadurch gekennzeichnet, dass** die äußere Kante (6c) des Federelementes (6) in einem Winkel (α) zur Oberseite (5) geneigt ist.

13. Paneel nach einem oder mehreren der vorstehenden Ansprüche, **dadurch gekennzeichnet, dass** das Hakenelement (14) an dem unteren Verriegelungsabschnitt (16) durch einen in Richtung der Oberseite (5) hervorspringenden Absatz (19) und das Hakenelement (13) an dem oberen Verriegelungsabschnitt (15) durch einen in Richtung der Unterseite (4) gerichteten Absatz (17) ausgebildet sind.

14. Paneel nach einem oder mehreren der vorstehenden Ansprüche, **dadurch gekennzeichnet, dass** das Paneel (1, 2) eine Plattenstärke von etwa 7 mm bis etwa 8 mm aufweist.

15. Paneel nach einem oder mehreren der vorstehenden Ansprüche, **dadurch gekennzeichnet, dass** der Schlitz (7) gegenüber der Vertikalen (V) leicht geneigt ist.

## Claims

1. Panel, in particular floor panel, comprising
- a core (3) made of wood-based material or wood-based material/plastic mixture,
- a topside (5) and an underside (4),
- two mutually opposite lateral edges (I, II) which have a mutually corresponding profiling such that two identically formed panels (1, 2) can be connected and locked to one another by means of a substantially vertical assembly movement in the horizontal direction (H) and in the vertical direction (V), wherein
- the locking in the horizontal direction (H) can be achieved by means of a hook connection comprising an upper locking portion (15) with a hook element (13) and a lower locking potion (16) with a hook element (14), wherein
- the locking in the vertical direction (V) can be achieved by means of at least one spring element (6) which can be moved in the horizontal direction (H) and which is formed integrally out of the core (3), wherein
- the at least one spring element (6) provided on the lower locking portion (16) is free with respect to the core (3) in the direction of the opposite lateral edge (I) by means of a substantially vertical slot (7), and, during the assembly movement, snaps into place behind a locking edge (25) which extends substantially in the horizontal direction (H) and which is formed on a locking projection (24), and wherein
- the spring element (6) is connected, in the direction of its lateral edge (II), to the core (3) at at least one of its two ends (6a, 6b),
**characterized in that**
- the width (B₁, B₂) of the locking edge (25, 25a) differs in size over the length (L) of the opposite lateral edge (I).

2. Panel according to Claim 1, **characterized in that**, in order to vary the width (B₁, B₂), the locking projection (24) is provided in part, starting from the underside (4), with a chamfer (F) extending at an angle (γ).

3. Panel according to Claim 2, **characterized in that** the size of the angle (γ) is between 30 and 60 degrees.

4. Panel according to Claim 3, **characterized in that** the size of the angle (γ) is between 45 and 55 degrees.

5. Panel according to one or more of the preceding claims, **characterized in that** the smallest width (B₁) of the locking edge (25a) is at most 0.9 mm.

6. Panel according to Claim 5, **characterized in that** the smallest width (B₁) of the locking edge (25a) is 0.6 mm.

7. Panel according to Claim 1, **characterized in that** the substantially vertical slot (7) is formed at least in part through the lower locking portion (16).

8. Panel according to one or more of the preceding claims, **characterized in that** the at least one spring element (6) is connected to the core (3) at one of its ends (6a, 6b).

9. Panel according to Claim 8, **characterized in that** the substantially vertical slot (7) has, at its two ends (7a, 7b), transition regions (23) at which the substantially vertical slot (7) is not formed through the lower locking portion (16).

10. Panel according to one or more of the preceding claims, **characterized in that** the substantially vertical slot (7) is formed in the region of the hook element (14) of the lower locking portion (16).

11. Panel according to one or more of the preceding claims, **characterized in that** a plurality of spaced-apart spring elements (6) are provided over the length (L) of the lateral edge (II).

12. Panel according to one or more of the preceding claims, **characterized in that** the outer edge (6c) of the spring element (6) is inclined at an angle (α) with respect to the topside (5).

13. Panel according to one or more of the preceding claims, **characterized in that** the hook element (14) on the lower locking portion (16) is formed by a shoulder (19) protruding in the direction of the topside (5), and the hook element (13) is formed on the upper locking portion (15) by a shoulder (17) directed in the direction of the underside (4).

14. Panel according to one or more of the preceding claims, **characterized in that** the panel (1, 2) has a board thickness of from about 7 mm to about 8 mm.

15. Panel according to one or more of the preceding claims, **characterized in that** the slot (7) is slightly inclined with respect to the vertical (V).

## Revendications

1. Panneau, en particulier panneau de plancher, comprenant
- une âme (3) en matériau dérivé du bois ou en mélange de matériau dérivé du bois et de matière synthétique,
- une face supérieure (5) et une face inférieure (4),
- deux bords latéraux (I, II) opposés qui présentent un profilage se correspondant mutuellement tel que deux panneaux (1, 2) formés identiques puissent être reliés et verrouillés ensemble en direction horizontale (H) et en direction verticale (V), par un mouvement d'assemblage sensiblement vertical,
- le verrouillage en direction horizontale (H) peut être obtenu par une liaison à crochet comprenant une partie de verrouillage supérieure (15) présentant un élément crochet (13) et une partie de verrouillage inférieure (16) présentant un élément crochet (14),
- le verrouillage en direction verticale (V) peut être obtenu par au moins un élément languette (6) mobile en direction horizontale (H), formé d'un seul tenant à partir de l'âme (3),
- l'au moins un élément languette (6) prévu sur la partie de verrouillage inférieure (16) est libre en direction du bord latéral opposé (1) par rapport à l'âme (3) grâce à une fente sensiblement verticale (7) et, lors du mouvement d'assemblage, s'encliquette derrière un bord de verrouillage (25) s'étendant sensiblement en direction horizontale (H) qui est formé sur un élément de verrouillage en saillie (24),
- l'élément languette (6) est relié à l'une au moins de ses extrémités (6a, 6b) à l'âme (3), en direction de son bord latéral (II),
**caractérisé en ce que**
- la largeur (B₁, B₂) du bord de verrouillage (25, 25a) est de différentes tailles le long de la longueur (L) du bord latéral (I) opposé.

2. Panneau selon la revendication 1, **caractérisé en ce que** pour le changement de largeur (B₁, B₂), l'élément de verrouillage en saillie (24) est muni en partie, en partant de la face inférieure (4), d'un chanfrein (F) s'étendant avec un angle (γ).

3. Panneau selon la revendication 2, **caractérisé en ce que** la valeur de l'angle (γ) est comprise entre 30 et 60 degrés.

4. Panneau selon la revendication 3, **caractérisé en ce que** la valeur de l'angle (γ) est comprise entre 45 et 55 degrés.

5. Panneau selon l'une ou plusieurs des revendications précédentes, **caractérisé en ce que** la plus petite largeur (B₁) du bord de verrouillage (25a) s'élève au maximum à 0,9 mm.

6. Panneau selon la revendication 5, **caractérisé en ce que** la plus petite largeur (B₁) du bord de verrouillage (25a) s'élève à 0,6 mm.

7. Panneau selon la revendication 1, **caractérisé en ce que** la fente sensiblement verticale (7) est formée au moins en partie au travers de la partie de verrouillage inférieure (16).

8. Panneau selon l'une ou plusieurs des revendications précédentes, **caractérisé en ce que** l'au moins un élément languette (6) est relié à l'une de ses extrémités (6a, 6b) à l'âme (3).

9. Panneau selon la revendication 8, **caractérisé en ce que** la fente sensiblement verticale (7) présente à ses deux extrémités (7a, 7b) des régions de transition (23) où la fente sensiblement verticale (7) n'est pas formée traversant la partie de verrouillage inférieure (16).

10. Panneau selon l'une ou plusieurs des revendications précédentes, **caractérisé en ce que** la fente sensiblement verticale (7) est formée dans la région de l'élément crochet (14) de la partie de verrouillage inférieure (16).

11. Panneau selon l'une ou plusieurs des revendications précédentes, **caractérisé en ce que** plusieurs éléments languettes (6) espacés les uns des autres sont prévus sur la longueur (L) du bord latéral (II).

12. Panneau selon l'une ou plusieurs des revendications précédentes, **caractérisé en ce que** le bord extérieur (6c) de l'élément languette (6) est incliné d'un angle (α) par rapport à la face supérieure (5).

13. Panneau selon l'une ou plusieurs des revendications précédentes, **caractérisé en ce que** l'élément crochet (14) sur la partie de verrouillage inférieure (16) est formé par un bossage (19) faisant saillie en direction de la face supérieure (5) et l'élément crochet (13) sur la partie de verrouillage supérieure (15) est formé par un bossage (17) dirigé en direction de la face inférieure (4).

14. Panneau selon l'une ou plusieurs des revendications précédentes, **caractérisé en ce que** le panneau (1, 2) présente une épaisseur de plaque d'environ 7 mm à environ 8 mm.

15. Panneau selon l'une ou plusieurs des revendications précédentes, **caractérisé en ce que** la fente (7) est légèrement inclinée par rapport à la verticale (V).
